# EUROPÄISCHE PATENTSCHRIFT

(11) **EP 1 590 123 B1**
(45) Veröffentlichungstag und Bekanntmachung des Hinweises auf die Patenterteilung: **09.08.2006**
(21) Anmeldenummer: 04706182.5
(22) Anmeldetag: 29.01.2004
(51) Int. Cl.: B23K 26/12, B23K 26/14

(54) **VERFAHREN ZUM LASERSTRAHLSCHWEISSEN**
LASER BEAM WELDING METHOD
PROCEDE POUR LE SOUDAGE AU LASER

(30) Priorität: 04.02.2003 DE 10304473
(43) Veröffentlichungstag der Anmeldung: 02.11.2005
(73) Patentinhaber: Linde Aktiengesellschaft, 65189 Wiesbaden (DE)
(72) Erfinder: DANZER, Wolfgang, 84405 Dorfen (DE)
(74) Vertreter: Kasseckert, Rainer
(86) Internationale Anmeldenummer: PCT/EP2004/000804
(87) Internationale Veröffentlichungsnummer: WO 2004/069462

(56) Entgegenhaltungen:
- EP-A- 1 084 788
- GREZEV A N ET AL: "EFFICIENCY OF LASER WELDING IN SHIELDING GASES AT A HIGHER DENSITY OF RADIATION POWER" WELDING INTERNATIONAL, WELDING INSTITUTE. ABINGTON, GB, Bd. 11, Nr. 7, 1997, Seiten 548-550, XP000656102 ISSN: 0950-7116
- WATANABE M ET AL: "EFFECT OF SHIELDING GAS PLASMA ON MONITORING SIGNALS IN LASER WELDING: FEATURES OF MONITORING METHODS FOR LASER WELDING AND THEIRAPPLICATION (1)" WELDING INTERNATIONAL, WELDING INSTITUTE. ABINGTON, GB, Bd. 13, Nr. 1, 1999, Seiten 9-20, XP000791624 ISSN: 0950-7116

## Beschreibung

Die Erfindung betrifft ein Verfahren zum Laserstrahlschweißen mit einem Faserlaser, wobei ein von dem Faserlaser erzeugter Laserstahl auf eine Bearbeitungsstelle oder in die Nähe der Bearbeitungsstelle fokussiert wird und wobei auf die Bearbeitungsstelle ein heliumhaltiges Prozessgas geleitet wird.

Die Eigenschaften der Laserstrahlung, insbesondere die Intensität und gute Fokussierbarkeit, haben dazu geführt, dass Laser heute in vielen Gebieten der Materialbearbeitung zum Einsatz kommen. Die Laserbearbeitungsanlagen sind an sich bekannt. In der Regel weisen sie einen Laserbearbeitungskopf, gegebenenfalls mit einer zum Laserstrahl koaxial angeordneten Düse auf. Oftmals werden Laserbearbeitungsanlagen in Verbindung mit einer CNC-Steuerung eingesetzt. Auch beim Schweißen werden Laser immer umfangreicher eingesetzt, da das Laserschweißen im Vergleich zu konventionellen Schweißverfahren (MAG, WIG) eine gezieltere Wärmeeinbringung, einen geringeren Verzug und höhere Schweißgeschwindigkeit bietet. Ein Großteil der Laserschweißungen kommt ohne Zusatzmaterial aus. Dieses kann jedoch aus Gründen der Spaltüberbrückbarkeit oder der Metallurgie notwendig werden. Laserschweißen lassen sich nahezu alle Materialien, wie beispielsweise Stähle, Leichtmetalle und thermopla s-tische Kunststoffe.

Unter einem fokussierten Laserstrahl wird im Rahmen der Erfindung ein im wesentlichen auf die Werkstückoberfläche fokussierter Laserstrahl verstanden. Außer bei der überwiegend eingesetzten Methode mit auf die Werkstückoberfläche fokussierter Laserstrahlung kann die Erfindung auch bei der selten benutzten Variante mit nicht exakt auf die Werkstückoberfläche fokussierter Strahlung angewandt werden.

Neueste Entwicklungen in der Lasertechnik eröffneten die Möglichkeit der Verwendung von Faserlasern beim Laserschweißen. Bei den Faserlasern handelt sich um eine völlig neue Lasergeneration. Die Faserlaser unterscheiden sich in ihren Eigenschaften grundlegend von den bisher eingesetzten CO₂-Lasern, den Nd:YAG-Lasern und den Diodenlasern. Die höchste Laserleistungen werden mit CO₂-Lasern erreicht. Die Laserleistung des Faserlasers ist vergleichbar mit den Laserleistungen des CO₂-Lasers und des Nd:YAG-Lasers (der Diodenlaser zeichnet sich durch eine deutlich geringere Laserleistung aus und verhält sich deshalb beim Laserschweißen deutlich anders als die Hochleistungslaser) und liegt derzeit bei einigen hundert Watt. Die Wellenlänge des Faserlasers liegt, da als aktives Medium Seltene Erden, wie beispielsweise Ytterbium verwendet werden, im Bereich von 1060 bis 1080 nm und ist damit mit der Wellenlänge des Nd:YAG-Lasers vergleichbar. Der entscheidende Unterschied liegt jedoch in der Divergenz des Laserstrahls, des Fokusdurchmessers, der Fokuslänge und des Strahlparameterprodukts. Von diesen Größen ist das Strahlparameterprodukt diejenige, die durch den Laser festgelegt ist und die Eigenschaft des Laserstrahls entscheidend bestimmt. Das Strahlparameterprodukt ist eine konstante Größe, die von der Bauart des Lasers abhängt. Sie kann nicht durch optische Bauteile (Linsen oder Spiegel) verändert werden. Definiert ist das Strahlparameterprodukt als das Produkt aus den Strahlparametem Strahlradius in der Strahltaille und halber Divergenzwinkel (Fernfeldöffnungswinkel) und wird in der Einheit mm*mrad angegeben. Folglich ist das Strahlparameterprodukt ein Maß für die Fokussierbarkeit eines Laserstrahls. Je kleiner das Strahlparameterprodukt eines Lasers ist, desto kleiner ist die Fläche, auf die ein Laserstrahl fokussiert werden kann. Strahlparameterprodukte für Hochleistungslaser liegen typischerweise bei 3 bis 30 mm*mrad. Mit den neu entwickelten Faserlasern werden nun Strahlparameterprodukte von weniger als 1,6 mm*mrad, ja sogar von weniger als 1,4 mm*mrad erreicht. Bei einem Stahldurchmesser von 80 µm bedeutet ein Strahlparameterprodukt von weniger als 1,6 mm*mrad eine Divergenz von weniger als 40 mrad. Liegt die Leistung des Faserlasers nun beispielsweise bei 700 W wird an der Bearbeitungsstelle eine Leistungsdichte von mehr als 50 MW/cm² erreicht. Der Fokus am Bearbeitungsrot liegt in diesem Beispiel bei ca. 40 µm. Die Fokuslänge des Faserlasers liegt in etwa bei 150 mm. Dies bedeutet, dass die hohe Leistungsdichte über eine Weglänge von 150 mm erhalten bleibt und folglich nicht nur auf der Oberfläche des Werkstücks erreicht sondern auch im Werkstück beziehungsweise über das Werkstück hinweg (bei Werkstücken mit Dicken kleiner gleich 1,5 cm) vorgefunden werden kann. Der Grund für die hohe Leistungsdichte am Bearbeitungsort liegt somit in der exzellenten Fokussierbarkeit des Faserlasers, welche mittels des Strahlparameterprodukts spezifiziert ist. Im Vergleich dazu liegt die Leistungsdichte am Bearbeitungsort für die bisher üblichen Hochleistungslaser maximal im Bereich von einigen MW/cm und der Fokus im Bereich von Millimetern. Die Leistungsdichte am Bearbeitungsort hat sich durch die Einführung des Faserlasers damit vervielfacht. Von der Firma IPG Photonics werden beispielsweise Faserlaser mit Laserleistungen von 300 bis 700 W und Strahlparameterprodukte von weniger als 1,4 bis 0,7 mm*mrad angeboten, die an der Bearbeitungsstelle einen Fokusdurchmesser von weniger als 30 bis 50 µm aufweisen und über eine Fokuslänge von 150 mm verfügen. Die Faserlaser können entweder gepulst oder kontinuierlich betrieben werden.

Beim Laserstrahlschweißen mit Hochleistungslasern wird von der Laserstrahlung an der Bearbeitungsstelle Material verdampft bzw. ionisiert, welches sich vom Werkstück weg in Richtung Laser bewegt. An der Bearbeitungsstelle wird im Material eine Dampfkapillare erzeugt. Über diese Dampfkapillare gelangt die Laserenergie in die Tiefe des Materials. Dadurch können wesentlich schneller schlankere Schweißnähte erzeugt werden, als dies über eine Wärmeleitung des festen Materials von der Oberfläche in die Tiefe möglich wäre. Bei der Erzeugung dieser Dampfkapillare, welche auch Keyhole genannt wird, strömt sehr heißer, verdampfter, ja bei höheren Laserenergien sogar ionisierter Werkstoff dem Laserstrahl entgegen. Das plasmaförmige Material tritt in Wechselwirkung mit dem Laserstrahl und beeinflusst diesen. Wird die optische Dichte des Metalldampfes oder Metallplasmas zu hoch, kann die Laserstrahlung nicht mehr zum Werkstück gelangen und der Schweißprozess wird ineffektiv oder bricht sogar zusammen. Die Absorption der Laserstrahlung findet dabei hauptsächlich durch thermisch ionisiertes Plasma statt. Die Plasmabildung ist deshalb bei hohen Laserenergien besonders problematisch und führt hier auch zum Zusammenbruch des Schweißprozesses. Fehlt die nötige Energiedichte so absorbiert nur der Metalldampf. Die hierdurch verlorene Laserleistung kann zwar die Schweißgeschwindigkeit um einige 10% reduzieren, führt aber in der Regel zu keinem Abbruch des Schweißprozesses. Da die Laserleistung von Nd:YAG-Lasern i.a. geringer ist als die Laserleistung des CO₂₋Lasers kann beim Schweißen mit Nd:YAG-Lasern oftmals auf ein Prozessgas verzichtet werden. Bei hohen Laserenergien wird meist ein Prozessgas benutzt. Üblich ist es nun, durch die Auswahl des Prozessgases nicht nur das Plasma zu kontrollieren sondem auch den Werkstoff vor schädlichen Einflüssen der umgebenden Luft zu schützen.

Beim Faserlaser zeigt sich nun ein anderes Verhalten bezüglich der Dampfkapillare. Aufgrund der hohe Leistungsdichte am Bearbeitungsort und dem sehr kleinen Fokusdurchmesser entsteht eine sehr feine Dampfkapillare aus verdampftem Material und Plasma. Da weiterhin die Fokuslänge sehr groß ist, ist der Durchmesser der Dampfkapillare über einen weiten Bereich unverändert. Da der Durchmesser der Dampfkapillare proportional zum Fokusdurchmesser ist, ist der Durchmesser einer von einem Faserlaser erzeugten Dampfkapillare um ein vielfaches kleiner als der Durchmesser einer mit einem herkömmlichen Hochleistungslaser erzeugten Dampfkapillare.Folglich entsteht eine sehr schmale Dampfkapillare. Aus dieser sehr feinen und langen Kapillare können Dampf und Plasma nun sehr schlecht entweichen. Folglich entsteht in der Kapillare ein sehr dichtes Plasma, das von der Laserstrahlung nur sehr schwer durchdrungen werden kann. Aufgrund der Enge in der doch sehr langen Kapillare unterscheidet sich das Verhalten des Plasmas und des Dampfs deutlich von dem Verhalten eines Plasmas, das bei Verwendung der bisher üblichen Hochleistungslasern entsteht. Jedoch muss bei der Verwendung eines Faserlasers, damit qualitativ hochwertige Laserschweißwerbindungen entstehen, das Plasma und der Dampf beherrschbar sein.

Beim Laserschweißen mit Faserlasern treten eine Vielzahl von Probleme auf und es ist äußert schwierig qualitativ hochwertige Schweißverbindungen herzustellen. Die Schwierigkeiten unterscheiden sich deutlich von den Schwierigkeiten, die bei der Verwendung von bisher üblichen Hochleistungslasern auftreten. Zurückzuführen sind die Probleme auf die hohe Leistungsdichte an der Bearbeitungsstelle verbunden mit der großen Fokuslänge der Faserlaser. Insbesondere müssen die Eigenschaften der Dampfkapillare beeinflusst und Plasma und Dampf kontrolliert werden.

Der vorliegenden Erfindung liegt daher die Aufgabe zugrunde, ein Verfahren anzugeben, welches ein qualitativ hochwertiges Laserstrahlschweißen mit einem Faserlaser ermöglicht.

Die Aufgabe wird erfindungsgemäß dadurch gelöst, dass das Prozessgas aus 30 Vol.-% bis 90 Vol.-% Helium und restlich Argon besteht. Da das Prozessgas die Schweißstelle umfasst, ist diese vor der Umgebung geschützt. Ein wesentlicher Nachteil der Umgebungsluft ist neben den aggressiven Bestandteilen die in der Luft enthaltene Feuchtigkeit, da diese die Bildung von qualitätsmindernden Poren begünstigt. Wichtig ist deshalb, dass das Prozessgas entsprechend frei von Verunreinigungen ist. Da Helium ein inertes Gas ist, wird die Bearbeitungsstelle von Helium gegenüber der Umgebung geschützt. Des Weiteren können die Eigenschaften des Werkstoffs an der Schweißnaht durch die Auswahl der Bestandteile des Prozessgases gezielt beeinflusst werden. Entscheidend sind jedoch der Einfluss des Prozessgases auf den Schweißvorgang und die Auswirkungen des Prozessgases auf die Qualität der Schweißnaht.

Ummantelt der Prozessgasstrom den Laserstrahl direkt und gleichmäßig von allen Seiten, ist eine gezielte Beeinflussung des Schweißvorgangs besonders vorteilhaft möglich, da die Wechselwirkung des Prozessgases mit dem Werkstoff und dem Laserstrahl besonders ausgeprägt ist. Überraschenderweise hat sich nun gezeigt, dass mit einem heliumhaltigen Prozessgas die Plasmabildung auch in der sehr schmalen und ohne Erweiterung verlaufenden Dampfkapillare, die in dieser Form nur von einem Faserlaser erzeugt wird, kontrollierbar ist. Entscheiden ist dazu sowohl die Fähigkeit des Heliums die Plasmabildung zu kontrollieren und einzuschränken als auch die Eigenschaft des Heliums ein sehr kleines und leichtes Gas zu sein, welches sich leicht verflüchtigt. Die erst genannte Eigenschaft der Plasmakontrolle beruht auf der schweren lonisierbarkeit des Heliums und der Erhöhung der Transparenz des Plasmas und des Dampfes für den Laserstrahl. Die zweite der genannten Eigenschaften ist diejenige, die die speziellen Probleme, die bei der Verwendung des Faserlasers auftreten, löst. Aufgrund der leichten Flüchtigkeit des Heliums gelangt ein heliumhaltiges Prozessgas auch tief in die sehr schmale Dampfkapillare. Auch zeichnet sich Helium dadurch aus; dass es sich gleichmäßig in der Kapillare ausbreitet und nicht dazu neigt, sich an bestimmten Stellen oder bei direktem Materialkontakt anzusammeln. Dadurch wird es möglich, das Plasma über den gesamten Bereich der Dampfkapillare zu kontrollieren. Erst durch diese Kontrolle, die sich von der Oberfläche aus tief in das Werkstück hinein erstreckt, können die Vorteile des Faserlasers umfassend genutzt werden. Ohne eine wirksame Kontrolle des Plasmas in die Tiefe des Werkstücks hinein, kann die hohe Leistungsdichte nur an der Oberfläche des Materials genutzt werden, während von der Oberfläche räumlich entferntes Material über Wärmeleitung aufgeschmolzen werden muss. Hohe Schweißgeschwindigkeiten sind folglich nur mit dem erfindungsgemäßen Verfahren möglich, da dieses gewährleistet, dass der Laserstrahl tief in das Material eindringen kann und das Material direkt verdampft. Da der Faserlaser über eine sehr große Fokuslänge verfügt, steht die hohe Leistungsdichte auch im Inneren des Materials zur Verfügung und das Verdampfen des Materials ist besonders effektiv. Weiterhin wird mit dem erfindungsgemäßen Verfahren auch das Entstehen von Poren unterbunden. Da die Laserstrahlung bei Verwendung eines heliumhaltigen Prozessgases in das Material eindringen kann und aufgrund der gleichmäßigen Verteilung des Heliums eine Kapillare mit homogenen Eigenschaften entsteht, sind die Bedingung über die gesamte Tiefe der Kapillare vergleichbar und überall wird Material verdampft. Unregelmäßigkeiten durch plötzlich auftretende Dampfblasen oder unterschiedlich ausgeprägtes Verdampfen des Materials treten nicht auf. Dies unterbindet das Entstehen von Poren äußert effektiv. Dadurch wird es mit dem erfindungsgemäßen Verfahren möglich, qualitativ hochwertige Schweißnähte bei hohen Schweißgeschwindigkeiten herzustellen.

In einer vorteilhaften Ausgestaltung der Erfindung wird ein Prozessgas, welches 30 Vol.-% bis 90 Vol.-% Helium, vorzugsweise 30 Vol.-% bis 70 Vol.-% Helium, besonders bevorzugt 30 Vol.-% bis 50 Vol.-% Helium enthält, verwendet. In diesen Volumenbereichen zeigen sich die Vorteile des erfindungsgemäßen Verfahrens. Der zu wählende Anteil des Heliums hängt von der zu erzielenden Qualität, der Schweißgeschwindigkeit, vom Material und von wirtschaftlichen Überlegungen ab.

Das erfindungsgemäße Verfahren zeigt seine Vorteile bei nahezu allen Werkstoffen. Es eignet sich zum Schweißen von Stählen (un-, niedrig- und hochlegiert), korrosionsbeständigen Stählen, Edelstählen, Aluminium, Aluminiumlegierungen, Kupferbasis- und Nickelbasiswerkstoffen.

## Patentansprüche

1. Verfahren zum Laserstrahlschweißen mit einem Faserlaser, wobei ein von dem Faserlaser erzeugter Laserstahl auf eine Bearbeitungsstelle oder in die Nähe der Bearbeitungsstelle fokussiert und wobei auf die Bearbeitungsstelle ein heliumhaltiges Prozessgas geleitet wird, **dadurch gekennzeichnet, dass** das Prozessgas aus 30 Vol.-% bis 90 Vol.-% Helium und restlich Argon besteht.

2. Verfahren nach Anspruch 1, **dadurch gekennzeichnet, dass** ein Prozessgas, welches 30 Vol.-% bis 70 Vol.-% Helium, vorzugsweise 30 Vol.-% bis 50 Vol.-% Helium enthält, verwendet wird.

## Claims

1. Process for laser beam welding using a fibre laser, in which a laser beam generated by the fibre laser is focussed onto a working location or into the vicinity of the working location, and in which a helium-containing process gas is passed onto the working location, **characterized in that** the process gas consists of 30% by volume to 90% by volume helium, remainder argon.

2. Process according to Claim 1, **characterized in that** a process gas which contains 30% by volume to 70% by volume helium, preferably 30% by volume to 50% by volume helium, is used.

## Revendications

1. Procédé de soudage par faisceau laser à l'aide d'un laser à fibres optiques, dans lequel un faisceau laser créé par le laser à fibres optiques est focalisé sur l'emplacement de traitement ou à proximité de l'emplacement de traitement et un gaz de processus contenant de l'hélium est amené à l'emplacement de traitement, **caractérisé en ce que** le gaz de processus est constitué de 30 % en volume à 90 % en volume d'hélium, le reste étant de l'argon.

2. Procédé selon la revendication 1, **caractérisé en ce qu'**il utilise un gaz de processus qui contient de 30 % en volume à 70 % en volume d'hélium et de préférence de 30 % en volume à 50 % en volume d'hélium.
